# EUROPEAN PATENT APPLICATION

(11) **EP 2 369 267 A1**
(43) Date of publication of application: **28.09.2011**
(21) Application number: 09834158.9
(22) Date of filing: 03.12.2009
(51) Int. Cl.: F24J 2/54, H01L 31/042

(54) **SOLAR TRACKING DEVICE FOR PANELS**

(30) Priority: 24.12.2008 ES 200803694
(71) Applicant: Global Solar Fund Partners SARL, L2346 Luxemburgo (LU)
(72) Inventor: DOMINGO CABO, Alberto, 2346 Luxembourg (LU); LÁZARO FERNÁNDEZ, Carlos, 2346 Luxembourg (LU); PALACIOS CLIMENT, Francisco José, 2346 Luxembourg (LU)
(74) Representative: Ungria Lopez, Javier
(86) International application number: PCT/ES2009/070556
(87) International publication number: WO 2010/072871

(57) **Abstract**

The invention relates to a solar tracking device for panels. The device includes a modular structure in which each module is formed by a plurality of pairs of coplanar panels (1) which are fixed to the ends of respective shafts (2) arranged at right angles to a longitudinal pivoting shaft (4) mounted on suitable supports secured to the ground. The pivoting shafts (4) of the modules (8) rotate simultaneously, each including a first radial arm (9) connected to a first common connecting rod (10). In turn, the coupling shafts (2) of each pair of panels (1) of a single module rotate simultaneously, each including respective second parallel radial arms (16), the free ends of which are hingeably connected to a second common connecting rod (15). One of the pivoting shafts (4) is rotated by means of a first linear actuator (11) which is secured to the ground and to a mounting box (13) for a radial lever (12) thereof. The solar tracking device is completed by means of a second actuator (20) which connects the mounting box (13) to one of the second radial arms (16).

## Description

### OBJECT OF THE INVENTION

The present invention relates to a solar tracking device for panels, being of the type of two-shaft solar trackers for use in solar photovoltaic power generation plants.

The two-shaft tracker consists of a structure-mechanism based on metallic tubular profiles with two degrees of freedom.

The two degrees of freedom are controlled in principle by two linear actuators, one actuator for each degree of freedom.

It is an object of the invention to solve the orientation of solar panels in several columns and rows with two-shaft movement.

### BACKGROUND OF THE INVENTION

Currently, there is a large number of one-shaft and two-shaft trackers on the market, all of these are based on the same principles, and use generally metallic structures based on tubular profiles.

In the European patent application No. 1169604 a solar collector and tracking device comprising a set of rectangular solar panels located on opposite faces of a north-south orientation shaft are claimed, so that the get of solar panels is allowed to pivot on said north-south shaft for tracking the sun movement in relation to the earth; having a linear actuator with a body portion and a rod with its distal end coupled to an element connected to said north-south shaft, a linear actuator with its distal end coupled to said element for rotating said set of solar panels around the shaft; and a torque tube materializing said north-south shaft with the panels located on opposite faces thereof and hinging a pivoting element fixed to a pillar. This overall structure is characterized in that there is an element materialized by a torque arm extending from said torque tube to the end portion wherein the linear actuator rod is coupled, and by the fact that the body portion of the linear actuator is mounted on a base separate from that of the pillar,

So with this arrangement a simultaneous rotational movement of all panels is provided, with one degree of freedom by being the torque arms connected to a single rigid element linearly moving through the linear actuator.

The utility model No. 200800777 addresses a solar tracker, by means of which jointly supporting and directing a plurality of solar collection devices according to a longitudinal rotational shaft and a transverse rotational shaft is achieved, said plurality of solar collection devices being linearly arranged in the direction, of the mentioned longitudinal rotational shaft; the solar tracker comprising:
· At least a first cylindrical and hollow tubular element, the axial rotation of which causes the orientation of a plurality of solar collection devices connected thereto, and according to a longitudinal rotational shaft;
· Second tubular elements cross-section arranged and associated to corresponding solar collection devices, also essentially cylindrical and hollow, and whose axial rotations cause the orientation of the plurality of solar collection devices according to a rotation shaft transverse to the previous one;
· A system for simultaneous rotating these second tubular elements;
· Means for supporting the first tubular element on a surface on which the solar tracker is installed. Starting from this general arrangement, the solar tracker is characterised in that the second tubular elements are coupled to the first tubular element by using a transverse fixed hinged support and which is solidly coupled to the first tubular element, being shaped as an inverted "U" at branch ends of which the second tubular element is connected. The simultaneous rotation of the different second tubular elements is also carried through a rod parallel to the first tubular element to which some connecting rods extending from the respective second tubular element are hingeably connected. The simultaneous rotation rod is longitudinally moved by the diction of a motor unit. With this arrangement for achieving the optimal tracking, a complicated mechanical structure for connecting the second tubular elements of parallel alignments is needed, since in order to rotate the same alignment, the movement is achieved through the series of connecting rods 15 connected to the common rod 14.

In the French invention patent No. 26008741 a solar collector whose simultaneous rotation is achieved through a series of connecting rods jointly connected to the panels and hingeably connected to a common horizontal rod is also considered.

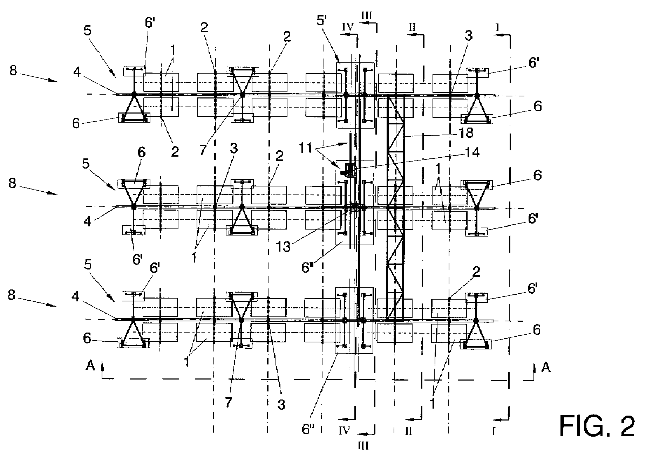

In the American patent document U.S. 4000734, an arrangement for achieving a simultaneous movement of different solar collectors by using connecting rods 25 jointly connected to said collectors and perpendicular thereto, connected to a common longitudinal rod, can also be seen in figure 2.

The American patent U.S. 4345582 also considers a dynamic system for solar tracking wherein several panels are also orientated simultaneously with a similar rod that is linearly moved and hinged to ribs stiffened to the solar panels themselves, whereby their simultaneous rotation is achieved. For moving the panels making a complete tracking of the sun, there is another perpendicular rod 6 that is tangentially pulled through some flat bars connected to a longitudinal rib actuated by a piston. There also exist pulleys flanked by a pair of parallel wires having tension members for simultaneously achieving the angular displacement of all shafts for supporting the panels, for the azimuth orientation simultaneously. This way of transmission through other different actuators is complicated and requires constant maintenance.

Tn the utility model 200702391 some improvements in the structures for solar tracking, of the type incorporating some booms as means for supporting a structure, so as the solar panels track the sun path in three shafts are claimed, a support structure for a horizontal pivoting shaft comprising means for rotating in the longitudinal direction and others for the transverse direction, very similarly to that mentioned above in relation to the utility model 200200777.

### DESCRIPTION OF THE INVENTION

In general terms, the solar tracking device for panels, object of the present invention, further being of the type mentioned in the background section of the invention, has a modular structure in which each one of the modules is formed by a plurality of pairs or quartets of panels fixed to a common shaft and coplanarly arranged. The different anchoring shafts jointly connected to the pairs of panels are in turn fixed with possibility of rotating a pivoting shaft properly placed between two or more mounting elements on the ground and at a convenient height.

The rotation of this pivoting shaft arranged in a north-south orientation performs an azimuthal solar tracking.

The shafts of each pair of panels are parallel to each other and perpendicular to the pivoting shaft, being capable of rotating simultaneously by being each of these shafts provided with a downward radial arm, the free end of which is hingeably connected to a second common connecting rod. The linear displacement of this second connecting rod causes the rotation of all shafts transverse to said pivoting shaft, and with this movement the height tracking of solar panels is achieved, i.e, the movement in a north-south direction, by having the shafts an east-west orientation.

In order to achieve the simultaneous rotation of the pivoting shafts of all modules, each of them includes a first downward radial arm, all of which being hingeably connected to a first connecting rod common to all of them. When this first connecting rod is linearly moved, the first radial arms are angularly displaced, and wherewith all pivoting shafts rotate simultaneously.

The second connecting rods of the different modules that have to be linearly moved in order to achieve the desired tracking are coplanar and parallel to each other, by being connected through a coupling element perpendicular to thereof, and which moves parallel to itself in order to achieve this simultaneous movement, being constituted by a lattice of horizontal profiles and transverse members, so that the second connecting rods can pivot when passing through two separate brushings conjoint with said lattice, these second connecting rods lacking however of linear movement with respect to said bushings.

The acquired and Synchronised movement for performing a perfect solar tracking is carried out with a first linear-type actuator that connects a fixed point on the ground to an eccentric point of a mounting box coupled in rotation with anyone of the pivoting shafts, this eccentric point being achieved by a lever radial to said selected pivoting shaft. From this same mounting box a second linear actuator, connecting said mounting box to one of the second radial arms of the same module is extended. With the first actuator the height tracking is achieved, and with the second actuator the azimuthal motion. With this arrangement, while the pivoting shaft rotates by actuating the first actuator, the drag of push, depending on the rotating direction, of the second actuator connected to the second radial arm is carried out, regardless of whether this second actuator would have had not modified its length.

The second radial arms for simultaneously pivoting all coupling shafts of the pairs of panels in the same module advantageously have a "Y" shape, so that between their branches the pivoting shaft is located, and said branches being solidly coupled through their ends to the respective coupling shaft of the pair of panels. The free end of the core of this "Y" shape is hingeably connected to the second common connecting rod for moving simultaneously.

As mentioned above, all pivoting shafts, parallel and coplanar, as well as the movement transmission mechanisms require ground connection. The supports have to provide enough rigidity to withstand the loads, not to interfere with the remaining elements of the tracking device, and have to be capable of height adjusting during assembly in order to absorb the height difference from the ground.

The supports are shaped like a tetrahedron built with metallic tubular profiles and at the top a vertical element that can be height adjustable and to which the cylindrical hinge of the pivoting shaft of the corresponding module for the east-west movement is located.

The tetrahedron is coupled at the base to other tubular profiles and is connected to the ground with concrete footings.

In order to facilitate the understanding of the features of the invention and being an integral part of this specification, some sheets of planes are attached, in figures of which with an illustrative and not limitative manner, the following has been represented:

### BRIEF DESCRIPTION OF THE DRAWINGS

**Figure 1****. -** It is a partial, schematic and perspective view of a solar tracking device for panels, object of the invention.
**Figure 2****.-** It is a plan view of that shown in figure 1, including the clamping or supports on the ground, and the coupling element of the second connecting rods.
**Figures 3****,** **4** **and** **5****.-** These are different elevational views according to that shown in figure 2, including the second actuator and the position sequentially occupied by the panels.
**Figure 6****.-** It is an elevational view along the line I-I of figure 2, with the panels being in horizontal position.
**Figures 7 and 8****.-** These are two partial views of that shown in figure 6, corresponding to one of the modules and in two tilt positions of the panels.
**Figure 9****.-** It is a view similar to that of figure 6, once the pairs of panels have rotated around their own coupling shafts.
**Figures 10 and 11****.-** These are two views similar to that of figures 7 and 8 respectively, once the rotation around said coupling shaft has been performed.
**Figure 12****.-** It is a broken-away view along the cutting line II-II of figure 2, similar to that of figure 6 but including the coupling element of the second connecting rods for simultaneously moving the panels in a north-south direction.
**Figures 13 and 14****.-** These are partial views of figure 12, corresponding to a single module and in two tilt positions of the panels.
**Figure 15****.-** It is a section along the cutting line ITT-III of figure 2, for seeing the location of the first common connecting rod.
**Figures 16 and 17****.-** These are partial views of figure 15, corresponding to a single module and in two tilted positions of the panels (not shown).
**Figure 18****.-** It is a section along the cutting line IV-IV of figure 2, for observing in one of the modules the three rotating positions a), b) and c) of the pivoting shaft produced by actuating the first actuator.
**Figure 19****.-** It is a partial, schematic and perspective view of one of the modules and specifically for seeing the mounting box jointly connected to one of the pivoting shafts and which is moved by the first actuator, this being in turn connected to the second actuator.
**Figures 20a - 20c.-** Represent different embodiments of the supports of the pivoting shaft wherein the panels are supported.
**Figure 21****.-** It is a perspective view of an embodiment of the mounting box coupled in rotation with the pivoting shaft wherein the panels are mounted.

### DESCRIPTION OF THE PREFERRED EMBODIMENT

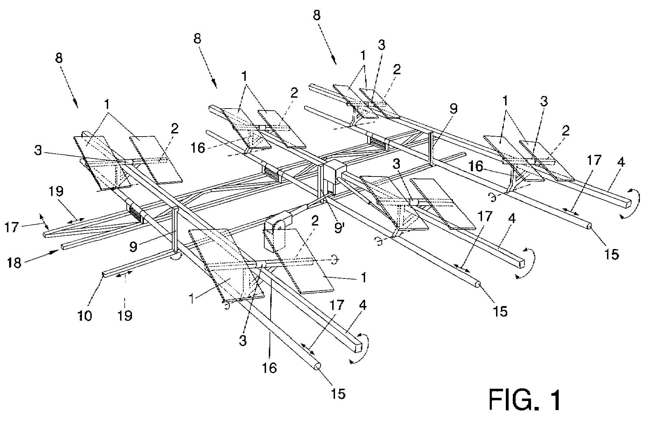

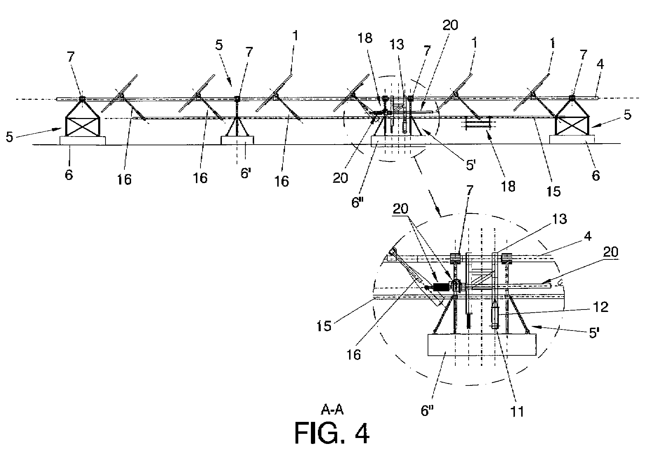

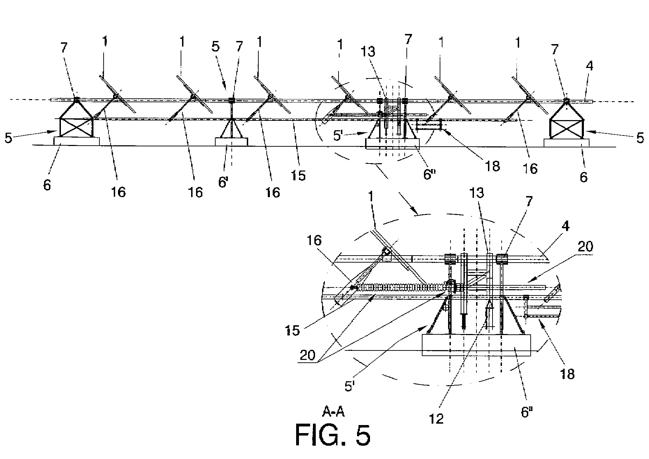

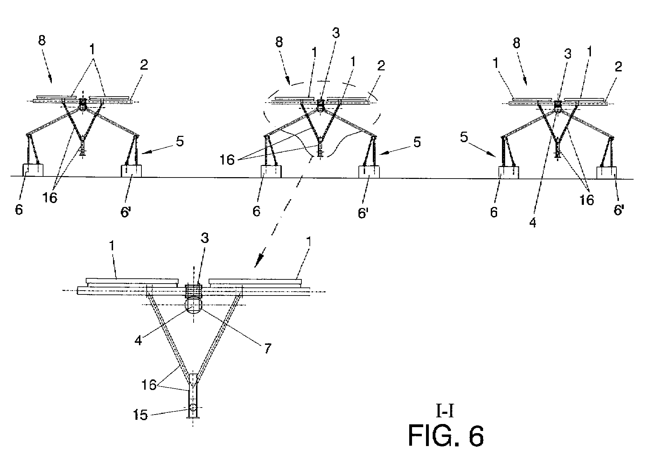

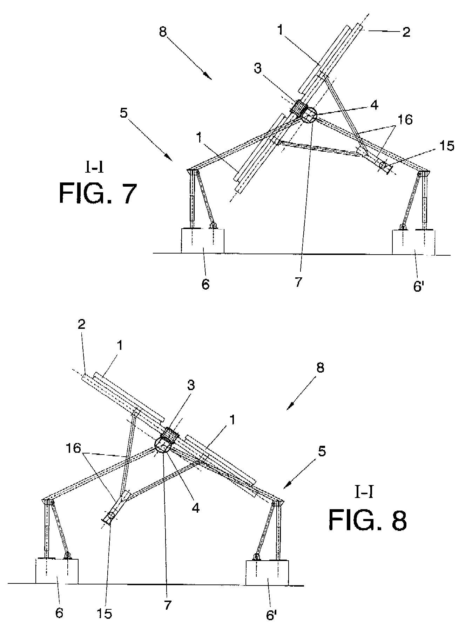

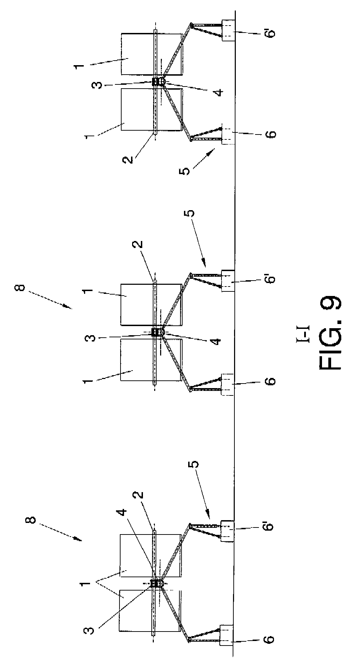

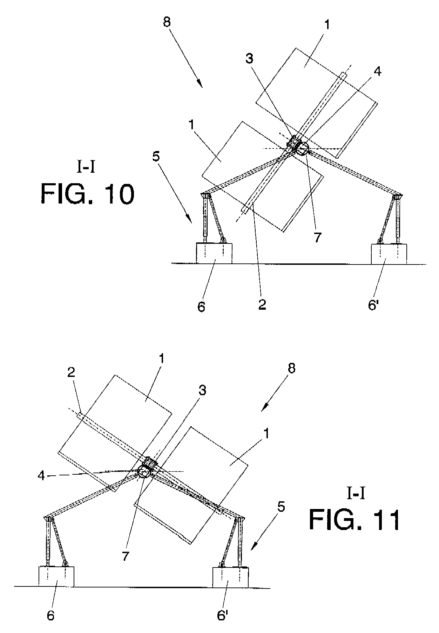

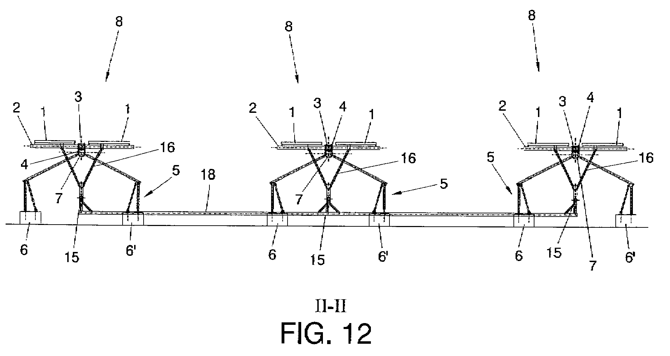

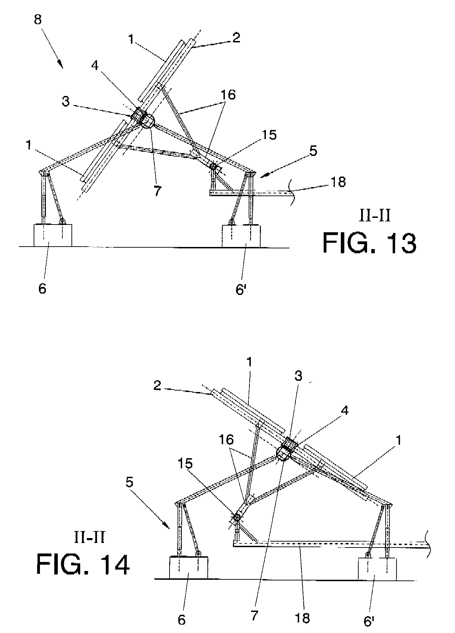

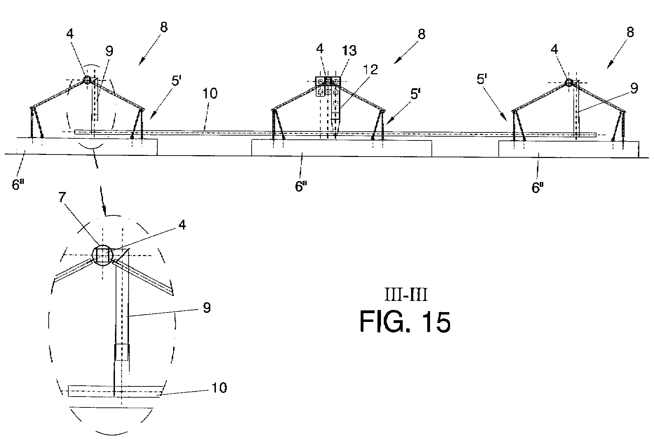

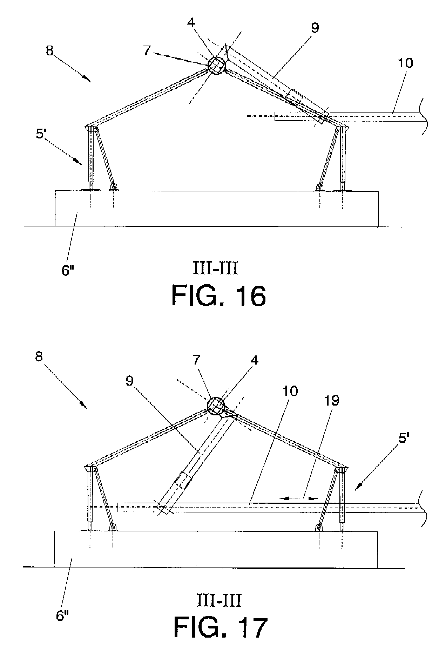

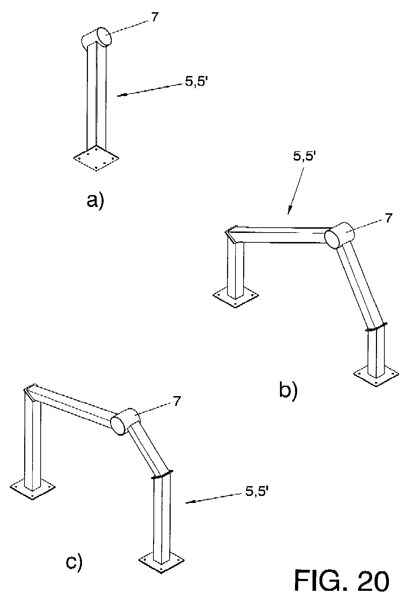

Referring to the numbering adopted in the figures, it can be seen how the solar tracking device for panels, proposed by the invention, as shown in figure 1 includes a plurality of panels 1 distributed in pairs anchored to the ends of some coupling shafts 2, arranged parallel to each other and passing through two separate bushings 3 transversally jointly connected to a pivoting shaft 4 and around which may rotate. The pivoting shaft 4 is horizontally supported on a series of supports 5, 5' fixed in footings 6 and 6' through appropriate bearings 7 (see figure 2). In figures 2 to 18 a support 5, 5' with three branches is shown, and figure 20a shows a support 5, 5' with a single vertical branch, the upper end of which supports the bearing 7, and in figures 20b and 20c two supports 5, 5' consisting of two branches are shown.

The pairs of panels 2 fixed to the pivoting shaft 4 constitute one of the modules 8, and there is a plurality of equal modules 8, the pivoting shafts 4 of which are parallel, coplanar and rotate simultaneously by being each one provided with a first radial arm 9 and by being the free ends thereof hingeably connected to a first common connecting rod 10.

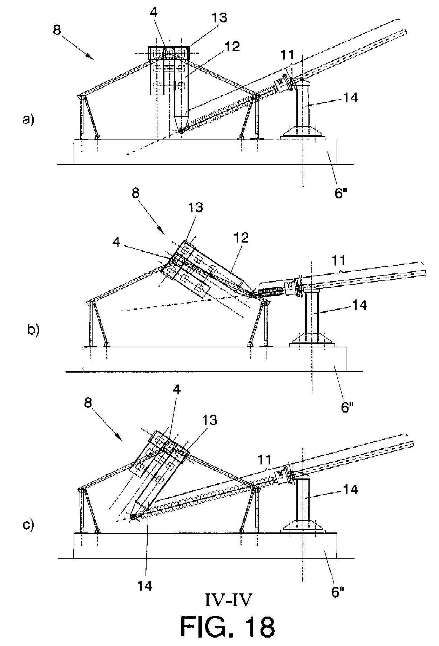

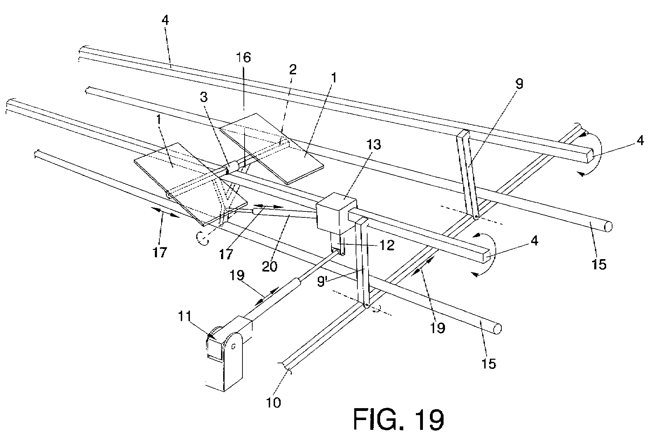

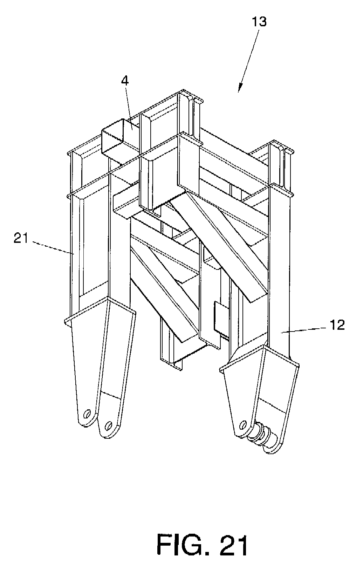

When anyone of these pivoting shafts 4 is rotated by using a first actuator 11 (see figure 18 and 19) connected to a lever 12 protruding from a mounting 13 jointly connected to the selected pivoting shaft 4 (the one in the center of figure 2). In figure 18 this first actuator 11 can be seen arranged in a column 14 fixed to a footing 6'' wherein the two supports 5' are fixed, on one and other side of the mounting 13. Tn figure 21 an embodiment of said mounting 13 is shown.

Returning to Figure 1, in the foregoing it has been addressed the movement of the panels 1 rotating with one degree of freedom when the pivoting shafts 4 does when acting linearly on the first connecting rod 10. This movement achieves the azimuthal direction, or east-west direction of the panels.

There is a second movement of the solar panels 1 for solar tracking in height or north-south, which is achieved by rotating the shafts 2 coupling each pair of panels 1 of a same module 8, by using a second connecting rod 15 parallel to pivoting shaft 4 and to which the lower ends of second radial arms 16 shaped as "Y" solidly coupled through their branches to the respective shaft 2 are hingeably connected. The core end of these radial arms 16 is that for hingeably connecting to the second connecting rod 15. The linear displacement of the second connecting rod 15, which takes place in the direction marked by the double arrows 17, is simultaneous to all second connecting rods 15 of the different modules, by having all of them a coupling element 18, materialized by the lattice of horizontal profiles and transverse members schematically shown in figure 1. The coupling element 18 is thus moved parallel to itself, and drags in its motion all second connecting rods 15. In this way, every pair of panels 1 rotate around their shafts 2 in order to perform the solar tracking in a north-south direction or azimuthal motion.

The solar tracking in the east-west direction for providing azimuthal motion, as discussed above, was achieved with the linear displacement of the first connecting rod 10 (see the double arrow 19 in this figure 1). In figure 19 one of the first radial arms 9' extending from the pivoting shaft. 4 connected to the mounting 13 is shown. The first connecting rod 10 to which said radial arm 9' is connected for simultaneously moving all the pivoting shafts 4 is also observed.

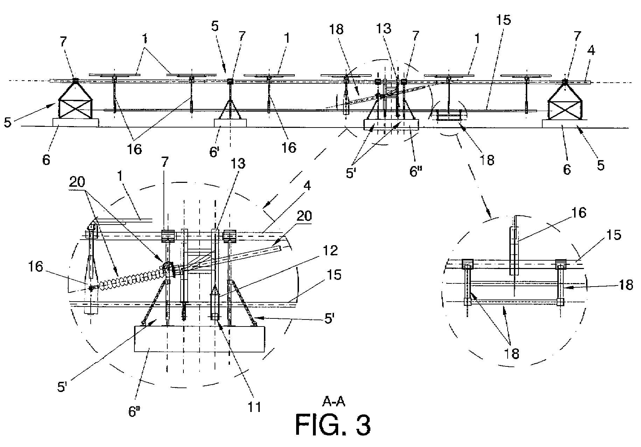

The parallel displacement of the coupling element 18 in the direction of double arrow 17 is performed by a second actuator 20 (see figures 3 and 19) acting on one of the second arms 16 from an arm 21 of the mounting 13. In this way, the rotation of the pivoting shaft 4 by actuating the first actuator 11 is achieved at the same time as the drag or push of the second actuator 20 on the second radial arm 16 is carried out (see figure 19), regardless of whether or not the length of the latter linear actuator has been changed. If the first actuator 11 moves longitudinally, while the second actuator 20 also does it longitudinally, at the preconceived values and programmed sequence, it is achieved that the optimal solar tacking for panels 1 be always perpendicular to the sun rays. Naturally, it returns to the starting position overnight.

## Claims

1. SOLAR TRACKING DEVICE FOR PANELS, of the type including a modular structure defined by modules formed by a plurality of pairs of panels coplanarly arranged and fixed to a single shaft, and these shafts being parallel to each other and perpendicular to a pivoting shaft moved by using a first actuator connected to a first radial arm of said pivoting shaft, the pivoting shafts of all modules being arranged parallel to each other, and their respective first radial arms being hingeably connected to a first common connecting rod for simultaneously pivoting by said first actuator; the shafts of each pair of panels in a same module being capable of rotating and pivoting simultaneously, by having there two separate second parallel radial arms, the free ends of which are hingeably connected to a second common connecting rod, and The second connecting rods of all modules being assisted by a second actuator for its simultaneous movement, **characterized in that** the first actuator (11) is of linear type, and couples a fixed point to an eccentric point of a mounting box (13) coupled in rotation with one of the pivoting shafts (4) materialized by the free end of a lever arm (12) through which all pivoting shafts (4) rotate simultaneously, and the second actuator (20) connects said mounting box (13) to one of the second radial arms (16) of one of the modules whereby all coupling shafts (2) rotate at the same time, raid coupling shafts (2) being connected to this pivoting shaft and those of all modules through a coupling clement (18) of all second connecting rods (15).

2. SOLAR TRACKING DEVICE FOR PANELS, according to claim 1, **characterized in that** the second radial arms (16) for pivoting of the coupling shafts (2) of the pairs of panels (1) have a "Y" shape, the branches of which are solidly coupled to symmetrical points of said coupling shaft (2), and the core does it hingeably to the second connecting rod (15).

3. SOLAR TRACKING DEVICE FOR PANELS, according to claims 1 and 2, **characterized in that** the coupling shafts (2) of each pair of panels (1) coplanar of each module, pass through and may rotate in bushings (3) jointly connected to the corresponding pivoting shaft (4).

4. SOLAR TRACKING DEVICE FOR PANELS, according to claim 1, **characterized in that** the second connecting rods (15), parallel and coplanar to each other, are jointly connected to a coupling element (18) perpendicular thereto.

5. SOLAR TRACKING DEVICE FOR PANELS, according to claim 4, **characterized in that** the coupling element (18) of the second connecting rods (15) moves parallel to itself and is materialized by a lattice of horizontal profiles and transverse members, said second connecting rods (15) being passed through by bushings jointly connected to said lattice with the possibility of rotation without axial displacement.
